# EUROPEAN PATENT APPLICATION

(11) **EP 1 903 662 A1**
(43) Date of publication of application: **26.03.2008**
(21) Application number: 06020001.1
(22) Date of filing: 25.09.2006
(51) Int. Cl.: H02K 3/40

(54) **A high voltage rotating machine and an electric installation provided therewith**

(71) Applicant: ABB RESEARCH LTD., 8050 Zürich (CH)
(72) Inventor: Märtensson, Eva, SE-722 20 Västeras (SE); Sahlen, Fredrik, SE-120 67 Stockholm (SE); Eriksson, Hans-Ake, SE-722 28 Västeras (SE); Ming, Li, SE-723 41 Västeras (SE)
(74) Representative: Fröderberg, Anders Oskar

(57) **Abstract**

A high voltage rotating machine comprising
a stator part (1) equipped with: a core part (2); a winding comprising a plurality of coils (4) each of which comprises a plurality of parallel conductors (7), arranged in a predetermined order and covered by a surrounding electrical insulation (9); said coils (4) extending through said core part in slots (3) therein and protruding out of the core part (2), thereby defining an overhang part (6) outside the core part (2), wherein there is also provided a corona protection layer (10) covering at least one of said coils (4) in the region in which said coil (4) exits the core part (2). The corona protection layer (10) extends such that it covers said coil (4) throughout the whole length of the overhang part (6).

## Description

### TECHNICAL FIELD

The present invention relates to a high voltage rotating machine, preferably a converter-fed high voltage machine, comprising: a stator part equipped with a core part; a stator winding comprising a plurality of coils each of which comprises a plurality of parallel conductors arranged in a predetermined order and covered by a surrounding electrical insulation, said coils extending through said core part in slots therein and protruding out of the core part, thereby defining an overhang part outside the core part, wherein there is also provided a corona protection layer covering at least one of said coils in the region in which said coil exits the core part.

In particular the invention relates to electric motors, preferably converter-fed electric motors by which the converter delivers high voltage pulses to the electric motor. The voltage pulses may be such that the mean value thereof defines a sinusoidal wave of an alternating voltage or the mean value of a direct voltage. The frequency of the pulses may, depending on the properties of the converter being used, be in the range of 100 Hz-20 kHz. The rise time of the individual pulses may be above 0.05µs, usually above 0,3µs, and below 50µs, usually below 2.0µs.

In the present application, the expression "form wound coils" will be used. Stators comprising form wound coils are intended for machines operating with approximately 1 kV and above. The windings thereof have been made from insulated coils that have been preformed prior to insertion in the slots in the stator core. The preformed coil comprises a continuous loop of conducting wire shaped into a coil (sometimes referred to as a diamond shaped coil) with additional insulation. Each coil, usually, may have 2-12 turns. Each turn may have one conductor and turn insulation, or may have a few strands (sub-conductors), strand insulation, and/or turn insulation. The conductors or strands, depending on which type of coil that is described, extend in parallel, normally in a stack or row, whereby, upon operation, the conductors or strands of a coil have different electric potential at each moment and for a given cross-section in accordance with a predetermined pattern. Preferably, the potential increases, for each conductor or strand, from the bottom of the stack or row to the top thereof, or inversely.

In particular high voltage is referred to as a voltage with an amplitude of approximately 0,5 kV and above, preferably approximately 1 kV and above.

### BACKGROUND OF THE INVENTION

Coil end corona protection is an important part of modem machine insulation systems of electric machines operating with voltages above a certain level. Today, that lower level may be in the range of 5-7 kV. However, this lower level may change in the future due to the technical development. The coil end corona protection has as its purpose to limit the surface discharges along the overhang part and the discharges between the ends of different coils of the stator. Both processes, types of discharges, will result in the degradation of the electrical insulation that surrounds the conductor part of the respective coils and may, ultimately, lead to breakdown of the insulation. Protection of this area is accomplished by applying stress grading layers, such as semi conductive tape, to the surface of the end winding portion of the coil, in the slot end region and the beginning of the overhang part. A corresponding corona protection is accomplished for the coil in the slot region by means of an electrically conducting layer covering the coil and being in contact with the surrounding stator core sheets.

Accordingly, the voltage gradient from the high voltage coil-end portion to the grounded slot portion will be controlled in such a way that the risk of having discharges is minimized. If the corona protection is properly applied, a uniform potential distribution along the field-graded layer can be reached under power frequency voltage.

However, the recent development of converters, or inverters, by means of which voltage pulses are fed to the motor, has resulted in the upcoming of somewhat different operation conditions in the slot end region in which the coils exit the core part of the stator. This is mainly due to the short rise times of the voltage pulses delivered to the motor. When an electric motor of contemporary design is subjected to the high frequency (HF) pulse voltages from a converter, more precisely an inverter, the stress grading conditions are changed and the electrical stress can be concentrated over a shorter region near the slot end. Thereby, the risk of having electrical discharges detrimental to the electrical insulation in said region is increased. Another consequence resulting from repetitive pulse voltages is local temperature increase in said region, which will also be of detrimental nature to the electrical insulation, and therefore unwished.

### THE OBJECT OF THE INVENTION

It is an object of the present invention to provide a high voltage rotating machine as initially defined, with an improved corona protection for the electrical insulation in the region in which the coils of the stator thereof exits the core part thereof, including the whole overhang part defined by the coils.

The object of the invention is also to present a high voltage rotating machine, the corona protection of which may be produced in an uncomplicated and economically advantageous way.

### SUMMARY OF THE INVENTION

The object of the invention is achieved by means of the initially defined high voltage machine, characterised in that the corona protection layer extends such that it covers said coil throughout the whole length of the overhang part.

According to a preferred embodiment, the corona protection layer is continuous. Thereby, a full-covering protection against unwanted discharges between coils or between coil and core is achieved in the coil exit region and in the overhang part defined by the coil.

Preferably, the corona protection layer comprises a conducting material.
Since the corona protection layer is in contact with, or should have the same electrical potential as the adjacent core of the stator core part it should be electrically conducting to a certain degree, in order to be able to adopt that electrical potential throughout its extension region in the overhang part. Should the conductivity be too low, it will, during operation, result in regions of increased electrical stress of the corona protection, and possible electrical discharges. Should the conductivity be too high, it will result in an increased generation of eddy currents and thermal hot spots in said protection layer, and also in increased power losses.

It is presently preferred that the corona protection layer has an electrical resistance in the range of 100-10 000Ω/□, most preferably approximately 1000Ω/□.

According to a further preferred embodiment, the corona protection layer provided on the overhang part of the coil is connected to earth. Upon operation, the corona protection layer will, due to the electric fields generated by the coil to which it is associated and by neighbouring coils, adopt a varying electric potential along the length thereof, as seen in the lengthwise direction of the coil. A connection to earth at some point along the path of the protective layer in the overhang part will, however, decrease the maximum amplitude of the electric potential thereof, thereby further preventing the generation of unwanted electrical discharges.

Preferably, the corona protection layer provided on the overhang part of the coil is connected to earth at a plurality of separate locations along the length of said coil in the overhang part thereof. By such repeated connections to earth along the length of the protective layer in the overhang part, an even further decrease of maximum electric potential thereof is achieved, and, as a result thereof, a further prevention of unwanted electrical discharges.

According to one embodiment, said coil is covered by a surrounding conductive layer in the part thereof that extends through the core part, and the corona protection layer is a further extension of said conductive layer. This solution is preferred from a manufacturing point of view. One and the same type of layer is used, which makes the manufacture less complicated. Also, the generation of a locally increased electric stress in the exit region in which the conductive layer, by definition, is substituted by the corona protection layer, is reduced by such a design.

According to an alternative embodiment, said coil is covered by a surrounding conductive layer in the part thereof that extends through the core part, and at least one part of the corona protection layer comprises a material with an electric conductivity different from that of said conductive layer. In the latter case, it is preferred that said at least one part, preferably all, of the corona protection layer has a higher electric conductivity than that of said conductive layer. An overlap of the two layers in the region where they meet might be conceived in order to have a smooth transition from one electric conductivity to another, in order to prevent increased local electric stress in said region. This solution might be preferred primarily from a technical point of view, since the optimum conductivity of the conductive layer in the core part may differ somewhat from the optimum conductivity of the corona protection layer in or adjacent the overhang part.

According to one embodiment, the corona protection layer comprises a tape wound around the electrical insulation that surrounds the conductors. This is a traditionally preferred way of applying the conductive layer arranged around the conductors in the part thereof that extends through the core part of the machine. Especially if the corona protection layer should be of the same material as the conducting layer, thereby forming an extension of the latter, this type of material and application might be preferred for the corona protection layer.

According to an alternative embodiment, the corona protection layer is formed by a varnish applied onto the electrical insulation that surrounds the conductors.

It is also preferred that the corona protection layer be covered by a further layer protecting it against environmental influence. Since the machine is likely to operate in an environment in which it will be subjected to dust etc., such a further layer will contribute to a more efficient function of the corona protective layer, and, accordingly, a longer life time of the underlying electrical insulation.

Preferably, all of said plurality of coils are covered by a respective corona protection layer in the overhang part thereof. Moreover, it is preferred that the coils are form wound coils, and that the machine defines a converter-fed machine.

The invention also relates to an electric installation, characterised in that it comprises a voltage frequency converter connected with a high voltage rotating machine according to the invention.

Further features and advantages of the present invention will be presented in the following detailed description and in the annexed drawings.

### BRIEF DESCRIPTION OF THE DRAWINGS

A preferred embodiment of the invention will now be described more in detail, by way of example, with reference to the annexed drawing, on which
Fig. 1 is perspective and schematic representation of a part of a machine according to one embodiment of the invention,
Fig. 2 is a cross-section of a coil according to the invention, and
Fig. 3. is a side view showing a part of the machine according to fig. 1 in the region in which a coil thereof exits a core part thereof.

### DETAILED DESCRIPTION OF THE INVENTION

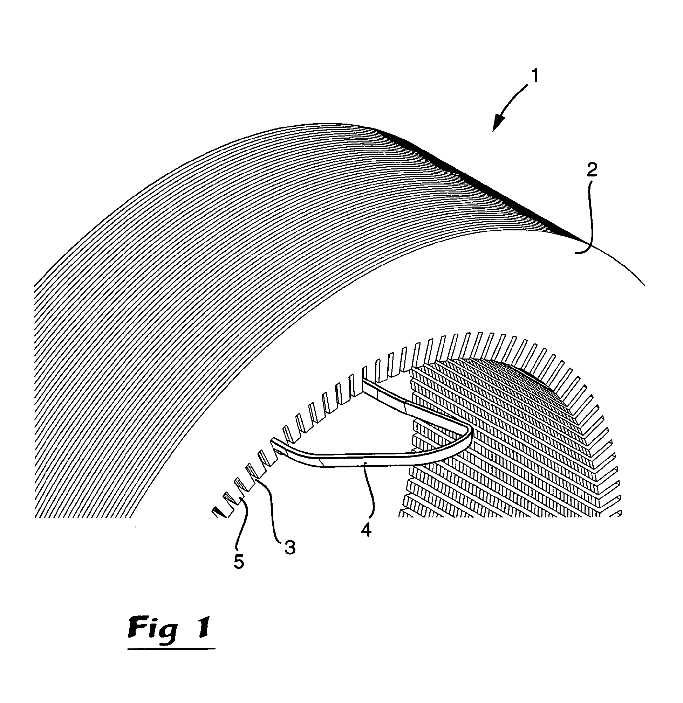

In fig. 1 there is shown a schematic representation of a part of a machine according to the invention. The machine is an electric motor, typically an asynchronous motor, comprising a stator 1 and a rotor (not shown for clarity purposes). The stator 1 comprises a core part 2, equipped with a plurality of slots 3 in which a winding comprising form wound coils 4 is arranged in a way known per se, though, for the sake of clarity, only one such coil 4 has been shown in fig. 1. The core part 2 is formed by a plurality of core sheets 5, stacked in a way known per se. Each coil 4 exits one slot 3, extends through an overhang region 6 outside the core part 2, returns to the core part 2 and enters another slot 3 therein.

The functionality of the asynchronous motor is such that the speed thereof, expressed in rpm, is intimately connected to the frequency of the voltage with which it is supplied or fed. Accordingly, this kind of motor has, traditionally, mostly been used in applications in which the speed thereof does not need to be varied or changed. However, asynchronous motors have become more widely used also in systems using variable motor speed, rpm. The machine will then be supplied with electric energy from an electric power converter, which generates an alternating voltage of variable frequency. Thereby, advantage is taken of the reliability and robustness of the asynchronous machine, while reducing the losses thereof and, thus, improving the yield thereof. The present invention includes the connection of such a converter to the inventive machine and the feeding of the machine with high frequent, alternating voltage.

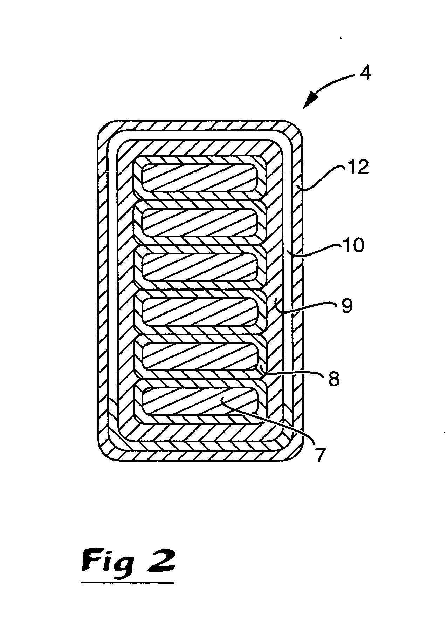

With reference now to fig. 2 there is shown a cross section of a separate coil in the slot region in which the coil 4 exits the core part 2. In the core part 2, the coil 4 is at least partly surrounded by adjacent core sheets 5 that, preferably and mainly, comprise iron and are connected to earth. The coil 4 consists of a plurality of conductors 7 arranged in parallel and extending in the lengthwise direction of the coil 4. Each conductor 7 may comprise a plurality of parallel sub-conductors or strands. However, such a design will not be shown here, since the underlying principles of the invention are the same regardless of whether there is any such further subdivision of the conductors 7 or not. Around each conductor 7, thereby separating the individual conductors 7, there is a first electrical insulation 8, the turn insulation, which prevents electric discharges between the individual conductors 7. Accordingly, each conductor, or turn, 7 is equipped with its associated turn insulation 8. The conductors 7, with the turn insulation 8 separating them, are arranged in a stack and extend alongside each other in a predetermined order with regard to the supply of electric energy thereto during operation. Upon operation, the electric potential will increase in a predetermined manner, normally stepwise, and preferably with the same amount for each step, from conductor to conductor, from one end of the stack to the other end thereof. The conductor package, i.e. the stack of conductors 7, will have a generally rectangular geometry (when regarding the cross-section thereof cross wise to the length direction thereof, as in fig. 2), or at least a non-circular geometry. Each conductor 7 also has a generally rectangular cross-section.

The stack of conductors 7 of an individual coil 4 is surrounded by a second insulation 9, the groundwall insulation, which preferably comprises mica tape wound around said stack. However, other materials are also conceivable.

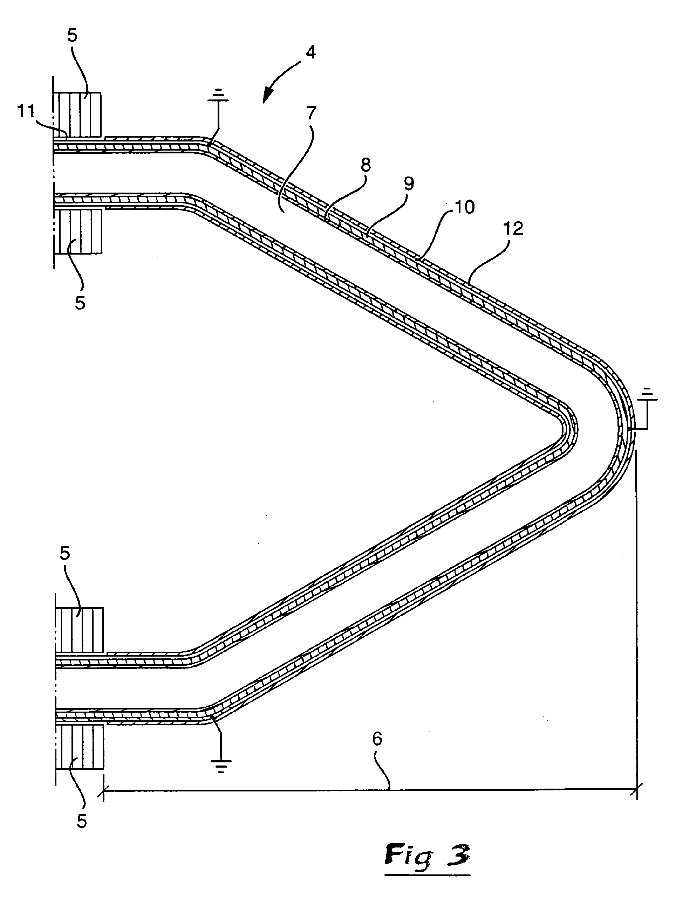

With reference now to fig. 3 there is shown a part of a coil 4 extending from the slot in which it exits the core part 2, represented by a number of stacked, adjacent core sheets 5, continues in a knuckle-shaped path, thereby defining the so called overhang, and enters through another slot into the core part 2. A similar or identical design is provided in the opposite end of the stator 1, and need, therefore, not be further described. In the overhang region the coil 4 is continuously covered by a corona protection layer 10 having as its purpose to limit the surface discharges along the overhang part and the discharges between the ends of different coils 4 of the stator 1. Preferably, the corona protection layer 10 is made of a conducting material such as a tape made of a non-woven polyester fleece or glass fabric and carbon black or graphite, or any other suitable material. Alternatively, the corona protection layer 10 may comprise a varnish of conducting material applied onto the coil 4. There is also the possibility of using a plurality of different materials or sub-layers for forming the corona protection layer 10, for example a combination of tape and varnish, or a combination of sub-layers, possibly of different conductivity.

Preferably, however, the corona protection layer 10 is a continuation of a conducting layer 11 that continuously covers the coil 4 all through the core part 2 of the stator 1. Said conducting layer 11 has as its purpose to ensure that the whole voltage drop occurs over the main insulation 9, thereby forming a corona protection of the slot part of the coil 4.

On top of the corona protection layer 10 there is provided a further layer 12 with the task of preventing environmental affection on the underlying layers. Said further layer 12 may comprise a tape of any suitable material, such as a polymer material. The further layer 12 extends continuously and completely covers the corona protection layer 12 in the overhang region.

Preferably, but not necessarily, the corona protection layer 10 provided on the overhang part 6 of the coil 4 is connected to earth at a plurality of separate locations along the length of said coil 4 in the overhang part 6 thereof. An example thereof is shown in fig. 3.

It should be understood that the above description of preferred embodiments has been made in order exemplify the invention, and that alternative solutions will be obvious for a person skilled in the art, however without departing from the scope of the invention as defined in the appended claims supported by the description and the drawings.

## Claims

1. A high voltage rotating machine comprising
a stator part (1) equipped with
- a core part (2),
- a stator winding comprising a plurality of coils (4) each of which comprises a plurality of parallel conductors (7), arranged in a predetermined order and covered by a surrounding electrical insulation (8, 9),
said coils (4) extending through said core part in slots (3) therein and protruding out of the core part (2), thereby defining an overhang part (6) outside the core part (2), wherein there is also provided a corona protection layer (10) covering at least one of said coils (4) in the region in which said coil (4) exits the core part (2),
**characterised in that** the corona protection layer (10) extends such that it covers said coil (4) throughout the whole length of the overhang part (6).

2. A high voltage rotating machine according to claim 1, **characterised in that** the corona protection layer (10) is continuous.

3. A high voltage rotating machine according to claim 1 or 2, **characterised in that** the corona protection layer (10) comprises a conducting material.

4. A high voltage rotating machine according to any one of claims 1-3,
**characterised in that** the corona protection layer (10) has an electrical resistance in the range of 100-10 000Ω/□.

5. A high voltage rotating machine according to any one of claims 1-4,
**characterised in that** the electrical resistance of the corona protection layer (10) is approximately 1000Ω/□.

6. A high voltage rotating machine according to any one of claims 1-4,
**characterised in that** the corona protection layer (10) provided on the overhang part (6) of the coil (4) is connected to earth.

7. A high voltage rotating machine according to any one of claims 1-6,
**characterised in that** the corona protection layer (10) provided on the overhang part (6) of the coil (4) is connected to earth at a plurality of separate locations along the length of said coil (4) in the overhang part (6) thereof.

8. A high voltage rotating machine according to any one of claims 1-7,
**characterised in that** said coil (4) is covered by a surrounding conductive layer (11) in the part thereof that extends through the core part (2), and that the corona protection layer (10) is a further extension of said conductive layer (11).

9. A high voltage rotating machine according to any one of claims 1-7,
**characterised in that** said coil (4) is covered by a surrounding conductive layer (11) in the part thereof that extends through the core part (2), and that at least one part of the corona protection layer (10) comprises a material with an electric conductivity different from that of said conductive layer (11).

10. A high voltage rotating machine according to claim 9, **characterised in that** said at least one part of the corona protection layer (10) has a higher electric conductivity than that of said conductive layer (11).

11. A high voltage rotating machine according to any one of claims 1-10,
**characterised in that** the corona protection layer (10) comprises a tape wound around the electrical insulation (8, 9) that surrounds the conductors (7).

12. A high voltage rotating machine according to any one of claims 1-10,
**characterised in that** the corona protection layer (10) is formed by a varnish applied onto the electrical insulation (9) that surrounds the conductors (7).

13. A high voltage rotating machine according to any one of claims 1-12,
**characterised in that** the corona protection layer (10) is covered by a further layer (12) protecting it against environmental influence.

14. A high voltage rotating machine according to any one of claims 1-13,
**characterised in that** all of said plurality of coils (4) are covered by a respective corona protection layer (10) in the overhang part (6) thereof.

15. A high voltage rotating machine according to any one of claims 1-14,
**characterised in that** the coils (4) are form wound coils.

16. A high voltage rotating machine according to any one of claims 1-15,
**characterised in that** it is a converter-fed machine.

17. An electric installation, **characterised in that** it comprises a voltage frequency converter connected with a high voltage rotating machine according to any one of claims 1-16.
